Europäisches Patentamt

(19) **European Patent Office**

Office européen des brevets

(11) Publication number: **0 169 691**
**B1**

(45) Date of publication of the patent specification:
**20.12.89**

(51) Int. Cl.⁴: **F16L 58/16**

(21) Application number: **85304974.0**

(22) Date of filing: **11.07.85**

(54) Applying protection to pipes and pipelines.

(30) Priority: **17.07.84 GB 8418141**
**01.10.84 GB 8424752**

(43) Date of publication of application:
**29.01.86 Bulletin 86/5**

(45) Publication of the grant of the patent:
**20.12.89 Bulletin 89/51**

(84) Designated Contracting States:
**AT BE CH DE FR IT LI NL SE**

(56) References cited:
**AT-B- 364 972**
**DE-A- 2 633 325**
**DE-U- 7 136 789**
**DE-U- 7 601 501**
**GB-A- 1 074 257**
**GB-A- 2 045 162**
**GB-A- 2 062 541**
**US-A- 3 024 153**
**US-A- 3 033 724**

(73) Proprietor: **W.R. GRACE LIMITED, Northdale House**
**North Circular Road, London NW10 7UH(GB)**

(72) Inventor: **Wingfield, Keith Anthony, Draycott Packhorse**
**Road, Gerrards Cross Buckinghamshire SL9 8HU(GB)**

(74) Representative: **Senior, Alan Murray et al, J.A. KEMP &**
**CO 14 South Square Gray's Inn, London WC1R 5EU(GB)**

ACTORUM AG

## Description

This invention relates to applying protection to pipes and pipelines.

It is well known to apply protective coverings to pipes and pipelines, whether or not they are to be located underground or underwater, to provide protection against corrosion from the exterior. For instance, the application of bituminous and polymeric paints is known and so is the method, which can provide very secure protection, of applying a wrapping helically along the pipe. Such a wrapping commonly comprises a substrate which is usually of a sheet material, typically being polymeric, and a membrane or layer of adhesive compound, which is self-adhesive at ambient temperatures so as to stick to the pipe without the aid of heat or solvent. The layer of adhesive may be reinforced and is typically bituminous, often a bituminous-rubber compound, the rubber being natural or synthetic. Such a wrapping is shown in GB-A 2 045 162.

Wrappings of this type are typically 15 cm wide and supplied in rolls about 12 metres long. That gives the weight of material which can conveniently be handled by two operators passing the roll from side to side of the pipe. They can then wrap the material under sufficient tension around the pipe in a helical manner to ensure that it conforms to the pipe. Wrappings may also be applied by machines in which case wider and longer rolls can be used. However, in view of the fact that pipelines can have diameters of 2 meters or even more, one roll does not cover very much of the pipeline and so a large number of rolls is required. This means that there is an equally large number of joints between the lengths of wrapping from successively used rolls. Such joints are likely to be the weak points in the protection system and the most likely locations for leakage, weakness and failure. For instance, particularly in hot conditions, the adhesive compound may become soft. The wrapping is initially applied under some tension, in order to the pipe, but the softness of the adhesive may allow the substrate to relax and shrink significantly in length. Thus, the wrapping suffers diminished strength, particularly towards the ends of each roll.

A similar problem arises in situations where a roll is to be wound spirally upon itself, to cover a particular part of a pipeline such as a welded joint. Slippage and lossening may occur.

The aim of the present invention is to reduce this difficulty.

The invention provides a method of applying a wrapping comprising a substrate and a membrane of a self-adhesive compound onto an elongate article such as a pipeline by applying successive lengths of the wrapping around the article in helical manner under tension, wherein the substrate of the initially applied part of each length of wrapping is directly bonded to the substrate of the last applied part of the preceding length of wrapping, without the compound being interposed.

Normally the successive lengths will be obtained from respective rolls of the wrapping, though it is conceivable that they could be provided in some other form.

With this aspect of the invention, a direct bond is established between the substrates in two successive lengths of wrapping without the self adhesive compound being interposed and, as a result, the tension in the wrapping can be maintained throughout the length of a helical winding, however long that may be.

According to the present invention, there is also provided a method of applying a wrapping comprising a substrate and a membrane of a self-adhesive compound onto an article such as a pipeline by applying a length of the wrapping around the article under tension, wherein the substrate of the last applied part of the wrapping is directly bonded to the substrate of a previously applied part of that or an earlier length of wrapping without the substrate being interposed.

This aspect of the invention is particularly useful where a wrapping is wound spirally upon itself, i.e. with each turn directly overlying the one beneath, rather than helically but it can also be used where the wrapping is wound helically. For instance, a second layer of wrapping may be applied over the length of a first layer and needs to be attached to the first layer at both ends. This is a case where having the substrate free from adhesive for a portion at each end is appropriate.

The invention also provides a protective wrapping for application to an elongate article such as a pipe comprising a substrate and a membrane of a self-adhesive compound to contact and adhere to the pipe, characterised in that the membrane extends throughout the length of the substrate except at or near one end thereof, where the substrate is free to be directly bonded to a substrate part beneath it without the membrane being interposed.

Such construction can be appropriate for wrappings along the length of a pipeline. However, there are some situations where instead of or in addition to a leading end, i.e. a first applied end, being free of adhesive it will be advantageous for a portion at or near the trailing or last applied end of the wrapping also to be free of adhesive. One application is that already mentioned, where a roll is to be wound spirally upon itself to cover a particular part of a pipeline such as welded joint. In this situation, the trailing end of the roll will advantageously be attached to the substrate of the previous lap directly beneath it, without interposition of the self-adhesive compound.

This wrappings of the invention can be such that the membrane is not provided at or near both said one end and the other end of the wrapping.

Also, the wrapping can be in the form of a roll and wherein said one end is the leading or trailing end of the substrate as it is applied to a pipe from the roll.

In all aspects and embodiments, the substrate to substrate bonding, whether between successive lengths or, on the other hand, involving a last applied end being bonded to an earlier applied part of the same length, can be effected in various ways. The way selected will generally depend upon the particular substrate in the wrapping material. This will normally be polymeric. The presently contemplated methods are high frequency welding, heat bonding brought about by application of hot air or a heated surface such as the surface of a heated pad, solvent welding, ultrasonic welding and the use of an adhesive. Solvent welding is preferred, in particular for substrates of polyvinyl chloride. Heated pads may be obtained from Radyne Limited.

By solvent welding we mean welding brought about by the surface of at least one of the substrates being treated with solvent, and the surfaces then being brought together. When the solvent flashes off a bond between the substrates remains making them, in a sense, integral with each other.

Where successive lengths of wrapping are connected, the area of direct bonding is preferably displaced slightly from the end of the previously applied length of wrapping. In other words, the overlap between successive lengths of wrapping in the helical direction is such that a part of the adhesive membrane of length of wrapping being applied overlies part of the substrate of the previously applied tape. In practice, shortly after commencement of application of each fresh length or roll of wrapping and before the first circumferential turn has been completed, the bonding is effected between the area of the end of the fresh length where adhesive is not provided, or has been removed, and the upper surface of the substrate at the end of the preceding roll. Thus, in the case of solvent welding or use of an adhesive, the flap with no compound on it at the end of the fresh length is exposed, the solvent or separate adhesive is applied onto the flap and/or the area immediately beneath it, making sure that total coverage occurs, and the flap is then immediately pressed down and air excluded by wiping and surplus solvent or adhesive will be wiped off. With the high frequency, ultrasonic or heat welding possibilities, the bonding will again take place shortly after the adhesive of each length contacts the pipe.

The invention is applicable to protecting both new and old pipelines. In a refurbishment operation of an old pipeline, it may be necessary to apply wrappings in exceedingly awkward conditions, for instance in a trench in which the pipe has been exposed. The labour employed, by its nature and due to the circumstances, may find it difficult to display a very high standard of craftsmanship.

It is preferred for this reason to use solvent welding, and for the solvent to be supplied in an aerosol can or compressible tube as these appear to be the quickest and most convenient ways of applying it.

Of the five possible jointing methods mentioned, any could be used for PVC, but solvent welding, particularly using an aerosol applied solvent, is expected to be the most appropriate. For polyethylene, heat or adhesive are the most practical possibilities and for polyester ultrasonic welding and the use of adhesives are the most appropriate.

Solvents based on materials for use in jointing PVC sections are already available, for instance for joining sections of PVC pipes for instance from Imperial Chemical Industries, and the solvents contemplated for use in the present invention could be similar to these readily available commercial products.

In order that the invention may be more clearly understood, the following description is given by way of example only, with reference to the accompanying drawings, in which:-

Figure 1 is a side view of a pipe which is being wrapped with a protective wrapping in a manner according to the present invention,

Figure 2 is a view taken along the line 2:2 of Figure 1, and

Figure 3 is a transverse view of a pipe with another wrapping according to the invention wrapped upon itself therearound.

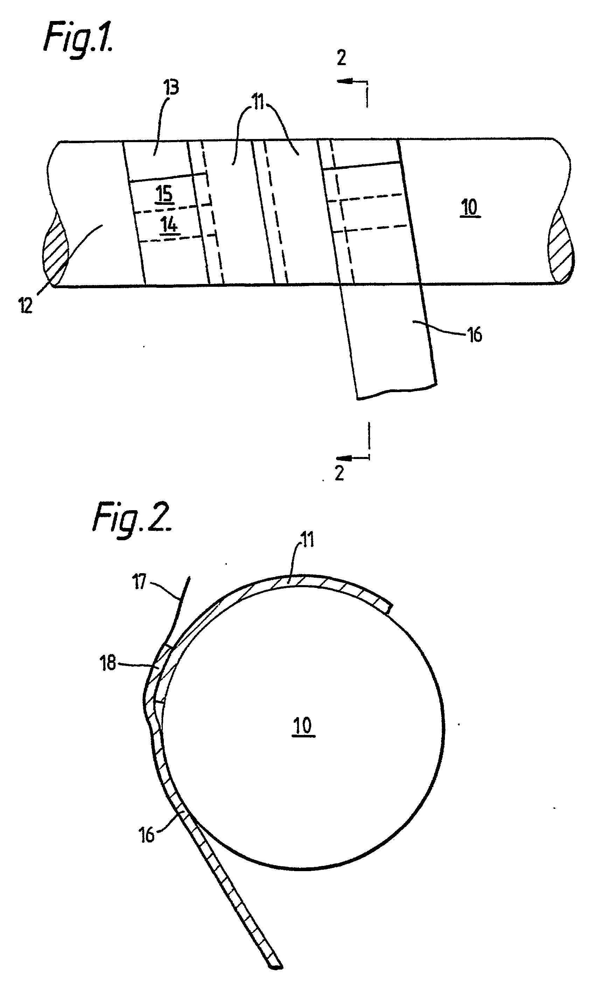

As shown in Figure 1, a pipe 10 is being wrapped towards the right in an overlapping helical manner using successive lengths of a protective wrapping material comprising a polymer substrate with a membrane of a self-adhesive compound permanently attached on one side thereof. One complete length of wrapping indicated at 11 is shown as having been applied. This has a leading end which at an area 12 overlaps the trailing end of the previously applied length indicated at 13. In the area of overlap there is a part 14 where adhesive on the length 11 contacts the upper surface of the tape 13 and a part 15 where the substrates of the two lengths are bonded together. It will be noted that the area of overlap is partly subsequently covered by the next turn of the length 11. The trailing end of the length 11 is shown as being contacted with the pipe and as being in turn covered by the next length, 16, as more particularly shown in Figure 2. In this instance, the length 16 has just begun to be applied. It has a flap 17 where there is no adhesive and which will be bonded to the substrate of the length 11. The first part 18 of the adhesive of the length 16 overlies and is adhered to the substrate at the very end of the length 11 and thereafter, downwardly as shown in Figure 2, the adhesive of the length 16 contacts the exterior of the pipe 10. In accordance with the invention, the non-adhesive-coated flap 17 is bonded to the substrate of the length 11 by one of the techniques mentioned above such as solvent welding in the case of PVC substrates. This joint must be carefully made so as to be watertight. By reason of this joint, the tension imparted to each length is retained and passed to the next with no possibility of the substrate contracting with the passage of time and leaving gaps in the polymeric substrate part of the pipe protection or reducing the structural strength of the assembly.

It may occasionally be the case that two or more gangs of workmen are applying wrapping to different parts of a pipe simultaneously. At some time, the work of one gang will catch up with the work of the other and the need will arise to connect the substrates of the two sets of wrappings. This can be done without any loss of waterproofness by simply bonding a patch of the material of the substrate to cover the substrate at the free end of the most recently applied length and the substrate beneath it. Thus, the patch is applied entirely over zones which have been protected with fresh lengths of wrapping, and no new leakage paths are created thereby. In contrast, were a simple patch used for instance in the zone 12 of Figure 1, additional leakage paths would arise. The patch would be only partly overlapped by the next turn of the length 11, and the possibility of a path down the edge of the patch between successive turns of tape would be increased.

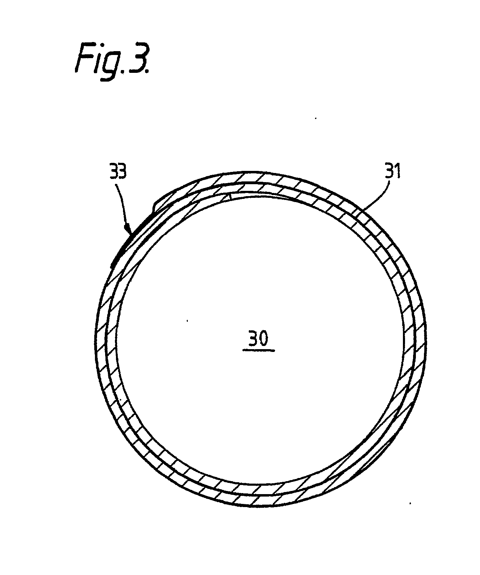

As shown in Figure 3, a pipe 30 has a wrapping 31, comprising a self-adhesive compound membrane and a substrate wrapped therearound in spiral manner so that each turn or part turn after the first lies directly upon a preceding one. As shown there are two and a bit complete turns but one and a bit turns, with no axial displacement, may be an appropriate arrangement. At the trailing edge of the wrapping, there is an area 33 of the substrate which is not associated with adhesive compound. This can be adhered to part of the substrate immediately below it by solvent welding or one of the other ways described above. Optionally, the leading edge of the wrapping is also lacking in adhesive so that this may be for instance adhered in a similar way to the pipe or perhaps a previously applied wrapping. In the case of solvent welding the solvent can be applied by hand using a brush, or using any suitable dispenser such as a pump e.g. a hand pump, or aerosol or a compressible tube.

**Claims**

1. A method of applying a wrapping comprising a substrate and a membrane of a self-adhesive compound onto an elongate article such as a pipeline by applying successive lengths of the wrapping around the article in helical manner under tension, characterised in that the substrate of the initially applied part of each length of wrapping is directly bonded to the substrate of the last applied part of the preceding length of wrapping without the compound being interposed.

2. A method according to claim 1, characterised in that the overlap between successive lengths of wrapping in the helical direction is such that a part of the adhesive membrane of a length being applied overlies part of the substrate of the previously applied length.

3. A method according to claim 1 or 2, characterised in that the last applied end of one length of the wrapping is bonded to part of the substrate beneath it by means of a patch of the substrate material being bonded to said end and said part.

4. A method according to claim 1 or 2, characterised in that the last applied end of one length of wrapping is directly bonded to part of the substrate beneath it without the compound being interposed.

5. A method of applying a wrapping comprising a substrate and a membrane of a self-adhesive compound onto an article such as a pipeline by applying a length of the wrapping around the article under tension, characterised in that the substrate of the last applied part of the wrapping is directly bonded to the substrate of a previously applied part of that or an earlier length of wrapping without the compound being interposed.

6. A method according to claim 5, characterised in that the wrapping is wound spirally upon itself so that each turn or part turn after the first lies directly upon the preceding one.

7. A method according to claim 6, characterised in that there is a second layer of wrapping wound over a first layer and attached to said first layer at one end and to the first layer or itself at the other end.

8. A method according to any one of claims 1 to 7, characterised in that the bonding is heat bonding.

9. A method according to any one of claim 1 to 7, characterised in that the bonding is by solvent welding.

10. A method according to claim 9, characterised in that the solvent is applied by an aerosol or compressible tube.

11. A method according to any one of claims 1 to 7, characterised in that the bonding is by high frequency welding.

12. A method according to any one of claims 1 to 7, characterised in that the bonding is by means of an adhesive.

13. A method according to any one of claims 1 to 7, characterised in that the bonding is by ultrasonic welding.

14. A protective wrapping for application to an elongate article such as a pipe comprising a substrate and a membrane of a self-adhesive compound to contact and adhere to the pipe, characterised in that the membrane extends throughout the length of the substrate except at or near one end thereof, where the substrate is free to be directly bonded to a substrate part beneath it without the membrane being interposed.

15. A protective wrapping according to claim 14, wherein the membrane is not provided at or near both said one end and the other end of the wrapping.

16. A protective wrapping acoording to claim 14 or 15 which is in the form of a roll and wherein said one end is the leading or trailing end of the substrate as it is applied to a pipe from the roll.

**Patentansprüche**

1. Verfahren zum Aufbringen einer Umwicklung, die ein Substrat und eine Membran aus einer selbsthaftenden Verbindung aufweist, auf einen langgestreckten Artikel wie eine Pipeline durch Aufbringen aufeinanderfolgender Längen der Umwicklung um den Artikel in schraubenförmiger Weise unter Zug, dadurch gekennzeichnet, daß das Substrat des anfänglich aufgebrachten Teils jeder Länge der Umwicklung direkt an das Substrat des zuletzt aufgebrachten Teils der vorhergehenden Länge der Umwicklung gebunden wird, ohne daß die Verbindung dazwischengefügt ist.

2. Verfahren nach Anspruch 1, dadurch gekennzeichnet, daß die Überlappung zwischen aufeinanderfolgenden Längen der Umwicklung in der schraubenförmigen Richtung so ausgeführt ist, daß ein Teil der haftenden Membran einer Länge, die aufgebracht wird, über einem Teil des Substrats der zuvor aufgebrachten Länge liegt.

3. Verfahren nach Anspruch 1 oder 2, dadurch gekennzeichnet, daß das zuletzt aufgebrachte Ende einer Länge der Umwicklung mittels eines Stücks des Substratmaterials an einen Teil des Substrats darunter gebunden wird, wobei das Stück an dieses Ende und diesen Teil gebunden wird.

4. Verfahren nach Anspruch 1 oder 2, dadurch gekennzeichnet, daß das zuletzt aufgebrachte Ende einer Länge der Umwicklung direkt an einen Teil des Substrats darunter gebunden wird, ohne daß die Verbindung dazwischengefügt ist.

5. Verfahren zum Aufbringen einer Umwicklung, die ein Substrat und eine Membran aus einer selbsthaftenden Verbindung aufweist, auf einen Artikel wie eine Pipeline durch Aufbringen einer Länge der Umwicklung um den Artikel unter Zug, dadurch gekennzeichnet, daß das Substrat des zuletzt aufgebrachten Teils der Umwicklung direkt an das Substrat eines zuvor aufgebrachten Teils dieser oder einer früheren Länge der Umwicklung gebunden wird, ohne daß die Verbindung dazwischengefügt ist.

6. Verfahren nach Anspruch 5, dadurch gekennzeichnet, daß die Umwicklung spiralförmig auf sich selbst gewunden wird, so daß jede Windung oder Teilwindung nach der ersten direkt auf der vorhergehenden liegt.

7. Verfahren nach Anspruch 6, dadurch gekennzeichnet, daß eine zweite Lage der Umwicklung vorliegt, die über eine erste Lage gewunden ist und an einem Ende an der ersten Lage und an dem anderen Ende an der ersten Lage oder sich selbst festgemacht ist.

8. Verfahren nach einem der Ansprüche 1 bis 7, dadurch gekennzeichnet, daß das Binden Wärmebinden ist.

9. Verfahren nach einem der Ansprüche 1 bis 7, dadurch gekennzeichnet, daß das Binden durch Lösungsmittelschweißen erfolgt.

10. Verfahren nach Anspruch 9, dadurch gekennzeichnet, daß das Lösungsmittel über ein Aerosol oder eine zusammendrückbare Tube aufgebracht wird.

11. Verfahren nach einem der Ansprüche 1 bis 7, dadurch gekennzeichnet, daß das Binden durch Hochfrequenzschweißen erfolgt.

12. Verfahren nach einem der Ansprüche 1 bis 7, dadurch gekennzeichnet, daß das Binden mittels eines Klebstoffs erfolgt.

13. Verfahren nach einem der Ansprüche 1 bis 7, dadurch gekennzeichnet, daß das Binden durch Ultraschallschweißen erfolgt.

14. Schutzumwicklung zur Aufbringung an einem langgestreckten Artikel wie einem Rohr, die ein Substrat und eine Membran aus einer selbsthaftenden Verbindung für den Kontakt zum und das Haften auf dem Rohr aufweist, dadurch gekennzeichnet, daß sich die Membran über die Länge des Substrats erstreckt, außer an oder nahe einem Ende davon, wo das Substrat frei ist, um direkt an ein Substratteil darunter gebunden zu werden, ohne daß die Membran dazwischengefügt ist.

15. Schutzumwicklung nach Anspruch 14, bei der die Membran weder an oder nahe dem einen Ende noch dem anderen Ende der Umwicklung vorgesehen ist.

16. Schutzumwicklung nach Anspruch 14 oder 15, die in Form einer Rolle vorliegt und bei der das eine Ende das vordere oder hintere Ende des Substrats ist, wenn es von der Rolle auf ein Rohr aufgebracht wird.

**Revendications**

1. Procédé pour appliquer un enroulement comprenant un substrat et un film d'un composé autoadhésif sur un article allongé tel qu'un conduit par application successive de longueurs autour de l'article, sous tension, de façon hélicoïdale, caractérisé en ce que le substrat de la partie initialement appliquée de chaque longueur d'enroulement est directement assemblé au substrat de la partie dernièrement appliquée de la longueur précédente de l'enroulement, sans interposition du composé.

2. Procédé selon la revendication 1, caractérisé en ce que le chevauchement entre les longueurs successives de l'enroulement dans le sens hélicoïdal est tel qu'une partie du film adhésif de la longueur appliquée chevauche une partie du substrat de la longueur appliquée précédemment.

3. Procédé selon la revendication 1 ou 2, caractérisé en ce que l'extrémité dernièrement appliquée d'une longueur de l'enroulement est assemblée à une partie du substrat en dessous de lui, au moyen d'un morceau du matériau de substrat assemblé à ladite extrémité et à ladite partie.

4. Procédé selon la revendication 1 ou 2, caractérisé en ce que l'extrémité dernièrement appliquée d'une longueur de l'enroulement est directement assemblée à une partie du substrat en dessous de lui, sans que le composé soit interposé.

5. Procédé d'application d'un enroulement comprenant un substrat et un film d'un composé autoadhésif sur un article tel qu'une conduite, en appliquant une longueur de l'enroulement autour de l'article, sous tension, caractérisé en ce que le substrat de la dernière partie appliquée de l'enroulement est directement assemblé au substrat d'une partie appliquée précédemment de celui-ci d'une précédente longueur de l'enroulement, sans que le composé soit interposé.

6. Procédé selon la revendication 5, caractérisé en ce que l'enroulement est enroulé en spirale sur lui-même si bien que chaque spire ou partie tourne, après les premières rouches, directement sur la précédente.

7. Procédé selon la revendication 6, caractérisé en ce qu'il y a une seconde couche de l'enroulement enroulée sur une première couche et attachée à ladite première couche à une extrémité et à la première couche ou à lui-même, à l'autre extrémité.

8. Procédé selon l'une des revendications 1 à 7, caractérisé en ce que l'assemblage est un assemblage par chaleur.

9. Procédé selon l'une des revendications 1 à 7, caractérisé en ce que l'assemblage est un soudage par solvant.

10. Procédé selon la revendication 9, caractérisé en ce que le solvant est appliqué par un aérosol ou un tube compressible.

11. Procédé selon l'une des revendications 1 à 7, caractérisé en ce que l'assemblage est un soudage à haute fréquence.

12. Procédé selon l'une des revendications 1 à 7, caractérisé en ce que l'assemblage est obtenu au moyen d'un adhésif.

13. Procédé selon l'une des revendications 1 à 7, caractérisé en ce que l'assemblage est un soudage à ultrasons.

14. Enroulement de protection pour application à un article allongé tel qu'un tube ou tuyau, comprenant un substrat et un film d'un composé auto-adhésif, en contact et adhérant au tuyau, caractérisé en ce que le film s'étend sur toute la longueur du substrat à l'exception d'une extrémité ou à proximité d'une extrémité de celui-ci, ou le substrat est libre d'être directement assemblé à une partie de substrat en dessous de lui, sans que le film soit interposé.

15. Enroulement de protection selon la revendication 14, caractérisé en ce que le film n'est pas présent à ou proche de cette extrémité ou de l'autre extrémité de l'enroulement.

16. Enroulement de protection selon la revendication 14 ou 15 en forme d'un rouleau et dans lequel ladite une extrémité est l'extrémité avant ou arrière du substrat tel qu'elle est appliquée à un tuyau à partir du rouleau.

*Fig.1.*

*Fig.2.*

Fig.3.